# EUROPÄISCHE PATENTSCHRIFT

(11) **EP 3 997 163 B1**
(45) Veröffentlichungstag und Bekanntmachung des Hinweises auf die Patenterteilung: **06.09.2023**
(21) Anmeldenummer: 20739358.8
(22) Anmeldetag: 10.07.2020
(51) Int. Cl.: C08K 3/013, C08K 3/36, C08L 33/10, B33Y 70/00

(54) **HARZZUSAMMENSETZUNG FÜR 3D-DRUCK**
FILLER FOR 3D PRINTING
CHARGE POUR IMPRESSION 3D

(30) Priorität: 11.07.2019 EP 19185772
(43) Veröffentlichungstag der Anmeldung: 18.05.2022
(73) Patentinhaber: Quarzwerke GmbH, 50226 Frechen (DE)
(72) Erfinder: SZILLUWEIT, Robert, 50374 Erftstadt (DE); KRUBER, Dirk, 53347 Alfter (DE); ZILLES, Jörg Ulrich, 50226 Frechen (DE); MÜHLING, Olaf, 50226 Frechen (DE)
(74) Vertreter: dompatent von Kreisler Selting Werner - Partnerschaft von Patent- und Rechtsanwälten mbB
(86) Internationale Anmeldenummer: PCT/EP2020/069481
(87) Internationale Veröffentlichungsnummer: WO 2021/005193

(56) Entgegenhaltungen:
- EP-A1- 2 502 728
- WO-A1-2019/048963
- US-A1- 2014 131 908
- US-B1- 7 476 347

## Beschreibung

Die vorliegende Erfindung betrifft eine strahlungshärtbare Harzzusammensetzung.

Im so genannten 3D-Druck, auch unter der Bezeichnung additive Fertigung bekannt, können durch schichtweises Auftragen von Materialien dreidimensionale Modelle erzeugt werden. Je nach gewählten Verfahren erfolgt der Aufbau des Modells aus Thermoplasten, Pulvern oder strahlungshärtbaren Harzen. Die Schichtdicken liegen dabei typischerweise im Bereich von 0,025 bis 0,100 mm, können aber auch bis zu 0,200 mm betragen.

Ein Bereich des 3D-Drucks, die Stereolithographie, verwendet dabei u.a. strahlungshärtbare Harze. Dabei werden strahlungshärtbare Zusammensetzungen auf Acryl-, Epoxid- oder Vinylesterharzbasis aufgetragen und anschließend typischerweise mittels Laser ausgehärtet.

Es ist bekannt, die strahlungshärtbare Harze mit Füllstoffen zu füllen, um die mechanischen Eigenschaften des Endproduktes in Hinblick auf die Anwendung zu verbessern.

EP 2 868 692 B1 beschreibt beispielsweise eine matrixgefüllte, strahlungshärtbare Harzzusammensetzung für entsprechende Verfahren.

Trotz zahlreicher Entwicklung besteht weiterhin Bedarf nach alternativen strahlungshärtbaren Harzzusammensetzungen für den Einsatz im 3D-Druck, die möglichst bessere Eigenschaften des Produktes, z.B. hohe Wärmeformbeständigkeit und hohe Steifigkeit, als der Stand der Technik aufweisen.

Gelöst wird die Aufgabe durch eine strahlungshärtbare Harzzusammensetzung umfassend
- 0 bis 30 Gew.-% eines oder mehrerer Oligomere,
- 15 bis 80 Gew.-% eines oder mehrerer Monomere,
- 10 bis 80 Gew.-% Füllstoffmischung,
- 0,1 bis 5 Gew.-% eines oder mehrerer Photoinitiatoren,
wobei die Füllstoffmischung Folgendes umfasst:
- 39,9 bis 90 Gew.-% erste Partikel mit einer Korngröße d50ᵥₒₗ von 3 bis 20 µm,
- 9,9 bis 60 Gew.-% zweiter Partikel mit einer Korngröße d50ᵥₒₗ von 0,5 bis 1 um,
- 0,1 bis 5 Gew.-% Nanopartikel mit einer BET im Bereich von 10 bis 100 m²/g.

In einer anderen Ausführungsform wird die Aufgabe gelöst durch eine strahlungshärtbare Zusammensetzung umfassend
- 0 bis 30 Gew.-% eines oder mehrerer Oligomere
- 1 bis 50 Gew.-% eines oder mehrerer Monomere
- 20 bis 75 Gew.-% Füllstoffmischung,
- 0,1 bis 5 Gew.-% eines oder mehrerer Photoinitiatoren
wobei die Füllstoffmischung folgendes umfasst:
- 40 bis 80 Gew.-% erste Partikel mit einer Korngröße d50ᵥₒₗ von 3 bis 20 µm
- 20 bis 60 Gew.-% zweiter Partikel mit einer Korngröße d50ᵥₒₗ von 0,5 bis 1 µm
- 0,5 bis 3 Gew.-% Nanopartikel mit einer BET im Bereich von 10 bis 100 m²/g.

Es können weitere Inhaltsstoffe enthalten sein, bevorzugt nicht mehr als 10 Gew.-%.

Beispiele für weitere Inhaltsstoffe sind Dispergiermittel, Antistatika, Flammschutzmittel, Farbmittel, Polymerisationsverzögerer (Inhibitoren), thermische Polymerisationsinitiatoren sowie Stabilisatoren, wie Antioxidantien und Lichtschutzmittel (UV-Absorber, HALS-Verbindungen).

Im Rahmen der vorliegenden Erfindung bezeichnet das Präfix "Cx-Cy-" (mit x bzw. y = 1, 2, 3, etc. und y > x), dass die zugehörige Alkylverbindung, -verbindungsklasse oder -gruppe aus x bis y Kohlenstoffatomen bestehen kann. "(Meth)acryl" steht verkürzt für Acryl- oder Methacrylverbindungen, "(hetero)aromatisch" für aromatische oder heteroaromatische Verbindungen, "(hetero)cyclisch" für cyclische oder heterocyclische Verbindungen.

Die strahlungshärtbare Harzzusammensetzung enthält unter anderem Oligomere.

Ein Oligomer ist ein Makromolekül, das aus mehreren strukturell gleichen oder ähnlichen Monomer-Einheiten aufgebaut ist. Die genaue Anzahl der Monomer-Einheiten ist offen, befindet sich jedoch in der Regel zwischen 10 und 100, insbesondere zwischen 10 und 30. Bei einer größeren Anzahl von Einheiten spricht man meist von einem Polymer.

Bevorzugt umfassen die Oligomere radikalisch polymerisierbare, ethylenisch ungesättigte Gruppen, beispielsweise (Meth)acrylatgruppen. In Ausführungsformen können Oligomere ein (Poly)Urethan-Rückgrat aufweisen.

Besonders geeignete Oligomere lassen sich in die Gruppen der aliphatischen Urethan(meth)acrylate, der aromatischen Urethan(meth)acrylate, der Polyester(meth)acrylate sowie der Epoxy(meth)acrylate einteilen.

Geeignete Oligomere sind beispielsweise unter den Produktnamen Ebecryl (Fa. Allnex), Sartomer (Fa. Arkema Group) und Genomer (Fa. Rahn AG) kommerziell erhältlich.

Viele kommerzielle Oligomere enthalten neben den eigentlichen Oligomeren weitere, meist niedermolekulare Inhaltsstoffe, die häufig als Reaktivverdünner bezeichnet werden.

Die Menge des Oligomers liegt bei 0 bis 30 Gew.-% bezogen auf die strahlungshärtbare Harzzusammensetzung, bevorzugt im Bereich von 0 bis 10 Gew.-%.

In einer anderen Ausführungsform liegt die Menge des Oligomers bei 0 bis 30 Gew.-% bezogen auf die strahlungshärtbare Zusammensetzung, bevorzugt im Bereich von 3 bis 7 Gew.-%.

Als weitere Komponente enthält die strahlungshärtbare Harzzusammensetzung Monomere.

Monomere sind ganz allgemein niedermolekulare, reaktionsfähige Verbindungen, die sich zu Oligomeren bzw. Polymeren zusammenschließen können.

Als Monomere können erfindungsgemäß alle Verbindungen eingesetzt werden, die über mindestens eine radikalisch polymerisierbare, ethylenische Doppelbindung verfügen.

Monomere können hinsichtlich der Anzahl ihrer radikalisch polymerisierbaren, ethylenischen Doppelbindungen unterschieden werden. Monomere, die über eine radikalisch polymerisierbare, ethylenische Doppelbindung verfügen, sind monofunktionell (Monomere I). Monomere, die über mehrere radikalisch polymerisierbare, nicht-konjugierte, ethylenische Doppelbindungen verfügen, sind polyfunktionell (Monomere II). Monomere II wirken vernetzend.

Die Monomere I werden bevorzugt ausgewählt aus der Gruppe:
Ia) der Ester von α,β-ethylenisch ungesättigten C3-C4-Carbonsäuren,
Ib) der Vinyl(hetero)aromaten,
Ic) der α,β-ethylenisch ungesättigten Mono- und Dicarbonsäuren, Carbonsäureanhydride und Carbonsäureamide,
Id) der Mono- und Diester von a,β-ethylenisch ungesättigten C4-C6-Dicarbonsäuren und
Ie) der Allyl- und Vinylester von Carbonsäuren.

Besonders bevorzugt werden die Monomere I aus den Gruppen Ia), Ib) und Ic) ausgewählt.

Geeignete Monomere I aus der Gruppe Ia) sind
- (Meth)acrylate von unverzweigten, verzweigten und cyclischen Alkanolen mit 1 bis 22 Kohlenstoffatomen im Alkanolrest, wie beispielsweise Methyl(meth)acrylat, Ethyl(meth)acrylat, *n*-Butyl(meth)acrylat, *tert-*Butyl(meth)acrylat, Ethylhexyl(meth)acrylat, Isodecylmethacrylat, Isobornyl(meth)acrylat und 4-tert-Butylcyclohexyl(meth)acrylat.
- Aromatische und heteroaromatische (Meth)acrylate, wie beispielsweise Benzyl(meth)acrylat, 2-Hydroxy-3-phenoxypropyl-(meth)acrylat, Phenoxyethyl-(meth)acrylat, Phenyl(meth)acrylat, Pentabrombenzyl-(meth)acrylat, Pentabromphenyl-(meth)acrylat, 2,4,6-Tribromphenyl-(meth)acrylat, 9H-Carbazol-9-ethyl-(meth)acrylat, 2-Hydroxypropyl-2-([meth]acryloyloxy)ethyl-phthalat, 1-Naphthyl-(meth)acrylat und 1-Pyrenmethyl-(meth)acrylat.
- Hydroxy-, Alkoxy-, Carboxy-, Amino-, Epoxy-, Sulfo-, Silyl- und Halogensubstituierte Alkyl(meth)acrylate sowie heterocyclische (Meth)acrylate, wie beispielsweise 2-Hydroxyethyl-, 2-Hydroxypropyl-, 3-Hydroxypropyl- , 2-Hydroxybutyl-, 3-Hydroxybutyl-, 5-Hydroxybutyl-, Hydroxyethyl-caprolacton-, 3-Chlor-2-Hydroxy-propyl-, 2-Methoxyethyl-, 2-Ethoxyethyl- , 2-Butoxyethyl-, Di(ethylenglycol)-methylether-, Di(ethylenglycol)-ethylether-, Di(ethylenglycol)-2-ethylhexylether-, Tri(ethylenglycol)-methylether-, Ethylenglycol-dicyclopentenylether-, Ethyldiglycol-, Ethyltriglycol-, Butyldiglycol-, 2-Carboxyethyl-, 2-(Dimethylamino)ethyl-, 2-(Diethylamino)ethyl-, 2-(Diisopropylamino)ethyl-, 2-(tert-Butyla-mino)ethyl-, 3-(Dimethylamino)propyl-, 2-[[(Butylamino)carbonyl]oxy]ethyl-, Glycidyl-, 2-(Methylthio)ethyl-, 3-(Trimethoxysilyl)propyl-, 2-(Trimethylsilyloxy)ethyl-, 3-[Tris(trimethylsiloxy)silyl]propyl-, Trimethylsilyl-, 2-Chlorethyl-, 2,2,2-Trifluorethyl-, Tetrahydrofurfuryl- und 2-*N*-Morpholinoethyl-(meth)acrylat sowie 4-(Meth)acryloyl-morpholin, mono-2-([Meth]acryloyloxy)-ethylsuccinat und mono-2-([Meth]acryloyloxy)-ethylmaleat.

Geeignete Monomere I der Gruppe Ib) sind beispielsweise Styren, 4-Acetoxystyren, 2-Bromstyren, 3-Bromstyren, 4-Bromstyren, 4-tert-Butoxystyren, 4*-tert-*Butylstyren, 2-Chlorstyren, 3-Chlorstyren, 4-Chlorstyren, 2,6-Dichlorstyren, 3,4-Dimethoxystyren, 2,4-Dimethylstyren, 2,5-Dimethylstyren, 4-Ethoxystyren, 3-Methylstyren, 4-Methylstyren, 4-Vinylanisol, 3-Vinylbenzylchlorid, 4-Vinylbenzylchlorid, 9-Vinylanthracen, 4-Vinylbiphenyl, 2-Vinylnaphthalen, 9-Vinylcarbazol, *N*-Vinylphthalimid, 2-Vinylpyridin, 4-Vinylpyridin und 1-Vinyl-2-pyrrolidinon.

Geeignete Monomere I der Gruppe Ic) sind beispielsweise (Meth)acrylsäure, Maleinsäure, Itaconsäure, Maleinsäureanhydrid, Itaconsäureanhydrid, Crotonsäureanhydrid, *N*-Ethyl-, *N*-Isopropyl-, *N-tert-*Butyl*-, N,N*-Dimethyl-, *N,N*-Diethyl-, *N*-Hydroxymethyl-, *N*-Hydroxyethyl-, *N*-(3-Methoxypropyl)-, *N*-(Butoxymethyl)-, *N*-(Isobutoxy-methyl)-, *N*-Phenyl-, *N*-Diphenylmethyl-, *N*-(Triphenylmethyl)- und *N*-[3-(Dimethylamino)propyl]-(meth)acrylamid.

Geeignete Monomere I aus der Gruppe Id) sind beispielsweise die Diester der Malein- und Itaconsäure mit Methanol, Ethanol, *n*-Butanol, Isobutanol und 2-Ethylhexanol.

Geeignete Monomere I aus der Gruppe Ie) sind beispielsweise Vinyl- und Allylacetat sowie die entsprechenden Propionate, Butyrate, Valerate, Capronate, Decanoate und Laurate.

Als polyfunktionelle Monomere II kommen
IIa) die (Meth)acrylsäureester von mehrwertigen Alkoholen,
IIb) die Vinyl- und Allylether von mehrwertigen Alkoholen sowie
IIc) zwei- oder mehrfach allyl-, vinyl- oder (meth)acrylsubstituierte (hetero)cyclische und (hetero)aromatische Verbindungen in Betracht.

Geeignete polyfunktionelle Monomere II der Gruppe IIa) sind beispielsweise Ethylenglycol-di(meth)acrylat, 1,3-Butandiol-di(meth)acrylat, 1,4-Butandioldi(meth)acrylat, 1,6-Hexandiol-di(meth)acrylat, 1,10-Decandiol-di(meth)acrylat, Di(ethylenglycol)-di(meth)acrylat, Tri(ethylenglycol)-di(meth)acrylat, Tetra(ethylenglycol)-di(meth)acrylat, Di(propylenglycol)-di(meth)acrylat, Tri(propylenglycol)-di(meth)acrylat, Tricyclodecandimethanol-di(meth)acrylat, 2-Hydroxy-1,3-di(meth)acryloxypropan, Glycerol-di(meth)acrylat, Glycerol-1,3-diglycerolat-di(meth)acrylat, Neopentylglycol-di(meth)acrylat, Diurethandi(meth)acrylat, Trimethylolpropan-ethoxylat-methylether-di(meth)acrylat, Trimethylolpropan-tri(meth)acrylat, Trimethylolpropan-ethoxylat-tri(meth)acrylat (EO-Grad = 3-20), Trimethylolpropan-propoxylat-tri(meth)acrylat, Pentaerythritol-tri(meth)acrylat, Glycerolpropoxylat-tri(meth)acrylat, Di(trimethylol)propan-tetra(meth)acrylat, Pentaerythritol-tetra(meth)acrylat, Di(pentaerythritol)-penta(meth)acrylat und Di(pentaerythritol)-hexa(meth)acrylat.

Geeignete polyfunktionelle Monomere II der Gruppe IIb) sind beispielsweise 1,4-Butandiol-divinylether, 1,6-Hexandiol-divinylether, Di(ethylenglycol)-divinylether, Bis[4-(vinyloxy)butyl]-adipat, Bis[4-(vinyloxy)butyl]-succinat, Bis[4-(vinyloxy)butyl]-isophthalat, Bis[4-(vinyloxy)butyl]-terephthalat, Bis[4-(vinyloxy)butyl]-1,6-hexandiylbiscarbamat, 1,4-Cyclohexandimethanol-divinylether, Tris[4-(vinyloxy)butyl]-trimellitat, Allylether und Trimethylolpropan-diallylether.

Geeignete polyfunktionelle Monomere II der Gruppe IIc) sind beispielsweise Divinylbenzen, 2,4,6-Triallyloxy-1,3,5-triazin, 1,3,5-Triallyl-1,3,5-triazin-2,4,6(1*H*,3*H*,5*H*)-trion, Tris[2-(acryloyloxy)ethyl]isocyanurat, 1,3,5-Triacryloylhexahydro-1,3,5-triazin, 2,2'-Diallylbisphenol-A, 2,2'-Diallylbisphenol-A-diacetatether, 1,4-Phenylendi(meth)acrylat, Bisphenol-A-ethoxylat-di(meth)acrylat (EO-Grad = 2-30), Bisphenol-A-glycerolat-di(meth)acrylat, Bisphenol-A-propoxylat-glycerolat-di(meth)acrylat, Bisphenol-A-di(meth)acrylat und Bisphenol-F-ethoxylat-di(meth)acrylat.

Die Menge der Monomere liegt bei 15 bis 80 Gew.-% bezogen auf die strahlungshärtbare Harzzusammensetzung, bevorzugt 15 bis 50 Gew.-%.

In einer anderen Ausführungsform liegt die Menge der Monomere bei 1 bis 50 Gew.-% bezogen auf die strahlungshärtbare Zusammensetzung, bevorzugt 15 bis 40 Gew.-%.

Die radikalisch polymerisierbare Zusammensetzung aus Monomeren und gegebenenfalls Oligomeren wird im Folgenden auch als Harz bezeichnet, d.h. ohne Füllstoffe. Strahlungshärtbare Zusammensetzung oder strahlungshärtbare Harzzusammensetzung bezieht sich auf die Mischung von Harz und Füllstoffen.

Als weitere Komponente enthält die strahlungshärtbare Harzzusammensetzung eine Füllstoffmischung. Füllstoffe sind anorganische Materialien.

Die Füllstoffmischung enthält Partikel in mindestens drei Korngrößenbereichen.

Die Korngrößen der ersten und zweiten Partikel liegen im Submikrometer- bis Mikrometerbereich. Sie werden durch einen d50ᵥₒₗ-Wert charakterisiert. Dies ist die Korngröße, bei der 50 Vol.-% der Partikel eine größere Korngröße und 50 Vol.-% der Partikel eine kleinere Korngröße als den d50ᵥₒₗ-Wert aufweisen.

Solche Korngrößen können beispielsweise durch Laserdiffraktometrie bestimmt werden. Die Bestimmung der Korngröße erfolgt gemäß ISO 13320. Ein geeignetes Gerät hierfür ist das CILAS 1064 der Fa. Quantachrome. Für die Bestimmung der Korngrößen wird folgende Methode herangezogen:
Die Einzelfraktionen der Füllstoffe werden in Isopropanol mittels Ultraschall und Rühren dispergiert. Die Einwaage des Füllstoffes ist an die Eintrübung der Dispergierflüssigkeit gebunden. Dies wird über die Obscuration (Verdunklung) definiert. Die Obscuration der Dispergierflüssigkeit sollte zwischen 15-20 % liegen. Je nach Obscuration können die Einwaagen mehrere Gramm bis hin zu wenigen Milligramm betragen.

Besonders geeignete Materialien für die ersten und zweiten Partikel sind Füllstoffe, die aus der Gruppe ausgewählt werden, die aus amorphem Siliciumdioxid, kristallinem Siliciumdioxid, Feldspat, Glimmer, Anhydrit (Calciumsulfat) und Mischungen davon besteht.

Als Feldspat eignen sich insbesondere Kalifeldspat, Natriumfeldspat sowie sogenannte Foide sowie daraus resultierende Mischzusammensetzungen.

Als dritte Partikel enthält die Füllstoffmischung Nanopartikel. Im Rahmen dieser Erfindung werden unter Nanopartikel Teilchen mit einem mittleren Primärpartikeldurchmesser zwischen 1 nm bis 100 nm verstanden. Die Partikelgröße von Nanopartikeln lässt sich in der Regel nicht verlässlich durch Laserdiffraktometrie bestimmen. Andere Methoden, wie beispielsweise die Dynamische Lichtstreuung (DLS), sind dafür besser geeignet.

Für Nanopartikel werden häufig BET-Werte angegeben. Die BET-Messung ist ein Analyseverfahren zur Bestimmung der spezifischen Oberfläche (m²/g) mittels Gasadsorption. Die Abkürzung BET steht für die Nachnamen der Erfinder Brunauer, Emmett und Teller. Die Messungen zur Bestimmung der BET werden gemäß DIN ISO 9277 durchgeführt.

Als dritte Partikel (Nanopartikel) eignen sich insbesondere Materialien, die aus amorphen Siliciumdioxid bestehen und eine BET im Bereich von 10 bis 100 m²/g aufweisen.

Die Füllstoffmischung ist in einem Anteil vom 10 bis 80 Gew.-% in der strahlungshärtbaren Harzzusammensetzung enthalten.

In einer anderen Ausführungsform weist die Füllstoffmischung einen Anteil vom 5 bis 75 Gew.-% in der strahlungshärtbaren Zusammensetzung auf.

Bevorzugt beträgt der Gehalt an Füllstoffmischung mindestens 15 Gew.-%, mehr bevorzugt mindestens 25 Gew.-% oder 35 Gew.-% oder mindestens 50 Gew.-%. Füllstoffgehalte im Bereich von 55 bis 70 oder 55 bis 75 Gew.-% sind besonders bevorzugt.

Je höher der Füllgrad, desto besser sind die zu erwartenden mechanischen Eigenschaften und/oder höher ist die Steifigkeit der ausgehärteten Harzzusammensetzung.

In einigen Ausführungsformen sind die ersten Partikel silanisiert.

In einer zweiten Ausführungsform sind die zweiten Partikel silanisiert.

In einer dritten Ausführungsform sind die dritten Partikel silanisiert.

In einer vierten Ausführungsform sind sowohl die ersten als auch die zweiten Partikel silanisiert.

In einer fünften Ausführungsform sind sowohl die ersten als auch die zweiten und dritten Partikel silanisiert.

Unter Silanisierung wird die Beschichtung der Partikeloberfläche mit Silanverbindungen verstanden. Die Anbindung erfolgt durch Kondensationsreaktionen zwischen hydrolysierbaren Gruppen der verwendeten Silane und chemischen Gruppen an der Partikeloberfläche.

Die Silanisierung kann beispielsweise durch Behandlung mit Triethoxyvinysilan, Trimethoxyvinysilan oder Methacryloxypropyltrimethoxysilan erfolgen. Dem Fachmann sind weitere geeignete Silanierungsmittel bekannt. Verschiedene Partikel können auch mit unterschiedlichen Mitteln oder Mischungen von Mitteln silanisiert sein.

Es ist bevorzugt, dass die ersten Partikel sphärisch sind. Da die ersten Partikel relativ groß sind (3 bis 20 µm), kann der sphärische Charakter einfach mittels Lichtmikroskop beobachtet werden. Solche Analysen können auch automatisiert werden, beispielsweise durch Geräte, die unter dem Namen QICPIC^{®} von der Firma Sympatec GmbH, Clausthal-Zellerfeld, Deutschland vertrieben werden.

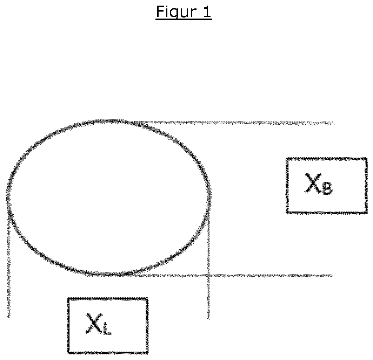

Die Sphärizität ist ein Maß für die Kugelförmigkeit eines Körpers. Diese kann über das Breiten-/Längenverhältnis X_{B}/X_{L} der vermessenen Partikel bestimmt werden. Bei einer Kugel beträgt dieses Verhältnis 1. Der kleinere Wert ist immer als Breite zu definieren. Schematisch ist dies in Figur 1 gezeigt.

Sphärisch im Sinne dieser Anmeldung sind Partikel, bei denen das Breiten-/Längenverhältnis mindestens 0,80 beträgt, besonders bevorzugt ≥ 0,90.

Weiterhin enthält die strahlungshärtbare Harzzusammensetzung einen Photoinitiator.

Photoinitiatoren sind chemische Verbindungen, die nach Absorption von elektromagnetischer Strahlung - häufig von (UV-)Licht im Wellenlängenbereich von ca. 250 - 400 nm - in einer Photolysereaktion zerfallen und so reaktive Spezies bilden, die eine chemische Reaktion - meist eine Polymerisation - starten können. Bei diesen reaktiven Spezies handelt es sich um Radikale oder um Kationen. Im Rahmen dieser Erfindung werden radikal-bildende Photoinitiatoren verwendet.

Als Photoinitiator kann prinzipiell jede chemische Verbindung verwendet werden, die bei geeigneter Bestrahlung Radikale bildet. Zur Gruppe geeigneter Photoinitiatoren zählen u.a.
1. α-Hydroxyarylketone, wie beispielsweise 2-Hydroxy-2-methylpropiophenon, 1-Hydroxycyclohexyl-phenyl keton,
2. α-Aminoarylketone, wie beispielsweise 2-Methyl-4'-(methylthio)-2-morpholino-propiophenon, 2-Benzyl-2-(dimethylamino)-4'-morpholinobutyrophenon,
3. α-Alkoxyarylketone, wie beispielsweise 2,2-Dimethoxy-2-phenylacetophenon, 2-Isopropoxy-2-phenylacetophenon, 2-*n*-Butoxy-2-phenylacetophenon,
4. Phosphinoxide, wie beispielsweise Diphenyl-(2,4,6-trimethylbenzoyl)-phosphinoxid, Ethyl(2,4,6-trimethylbenzoyl)phenylphosphinat, Phenyl-bis-(2,4,6-trimethylbenzoyl)phosphinoxid.

Bevorzugte Photoinitiatoren kommen aus der Gruppe der Phosphinoxide. Diese sind weitverbreitet und auch im industriellen Maßstab gut verfügbar. Typische Mengen sind 0,1 bis 5,0 Gew.-%. Bevorzugt sind Photoinitiatoren, die mit Strahlung im Wellenlängenbereich von 355 bis 405 nm aktiviert werden können.

Beispiele hierfür sind die Substanzen, die unter den Handelsnamen Omnirad TPO, CHIVACURE TPO, GENOCURE TPO, Omnirad TPO-L, CHIVACURE TPO-L, GENOCURE TPO-L, Lucirin BAPO, Irgacure 819 vertrieben werden.

Die Einarbeitung der Füllstoffmischungen in Harze kann über verschiedene Misch- und Dispergiersysteme erfolgen, wie beispielsweise Dissolver, Planetenmischer, Flügelmischer, Rotor-Stator-Dispergierer (z.B. Ultra-Turrax^{®}) oder Mischer, die nach dem Prinzip der dualen asymmetrische Zentrifuge (DAZ) funktionieren. Im Labormaßstab bieten DAZ-Mischer eine schnelle und einfache Dispergierung von Partikeln auch in hochviskosen Matrizes mit gleichzeitiger Entgasung.

Das Biegemodul und die Wärmeformbeständigkeitstemperatur von gehärteten Harzzusammensetzungen kann häufig durch eine Anhebung des Füllstoffanteils in der Harzzusammensetzung erhöht werden. Mit vielen kommerziellen Harzen ist eine Erhöhung des Füllgrads nicht möglich, weil der damit verbundene Viskositätsanstieg keine Weiterverarbeitung mehr zulässt. Um Füllgrade größer als 50 Gew.-% einstellen zu können, sollte die Viskosität des ungefüllten Harzes möglichst niedrig sein.

Das Harz ohne die Füllstoffmischung hat bevorzugt eine Viskosität im Bereich von 10 bis 1.000 mPa*s, besonders bevorzugt im Bereich von 10 bis 100 mPa*s, gemessen bei 25 °C und einer Scherrate von 10 s⁻¹ mit einer Platte/Platte-Geometrie.

Die erfindungsgemäße strahlungshärtbare Harzzusammensetzung hat bevorzugt eine Viskosität von maximal 3.000 mPa*s bei einer Scherrate von 10 s⁻¹ und von maximal 15.000 mPa*s bei einer Scherrate von 0,1 s⁻¹, jeweils gemessen bei 25 °C und mit einer Platte/Platte-Geometrie.

Gegenstand der Erfindung ist auch eine strahlungsgehärtete Harzzusammensetzung erhältlich durch Strahlungshärtung der erfindungsgemäßen strahlungshärtbaren Harzzusammensetzung.

Die so erhaltenen gehärteten Harzzusammensetzungen zeichnen sich durch gute mechanische Eigenschaften und eine hohe Wärmeformbeständigkeit aus.

So liegt das Biege-Elastizitätsmodul nach ISO 178 der gehärteten Harzzusammensetzung bevorzugt im Bereich von 6.000 bis 12.000 MPa, besonders bevorzugt bei mindestens 7.000 MPa.

Bevorzugt beträgt die Wärmeformbeständigkeitstemperatur (HDT A) nach ISO 75 mindestens 100 °C.

Die Erfindung wird durch die nachfolgenden Beispiele näher erläutert:

### Beispiele

### Verwendete Abkürzungen und Parameter

| | |
|---|---|
| MST | Methacryloxypropyltrimethoxysilan |
| a-SiO₂ | amorphes Siliciumdioxid |
| E_{f} | Biege-Elastizitätsmodul oder Biegemodul in Megapascal (MPa) nach ISO 178 |
| ε_{fB} | Biegedehnung beim Bruch in Prozent (%) nach ISO 178 |
| σ_{fB} | Biegespannung beim Bruch in Megapascal (MPa) nach ISO 178 |
| HDT A | Wärmeformbeständigkeitstemperatur (Heat deflection temperature) in Grad Celsius (°C) nach Verfahren A der ISO 75 |
| n.b. | nicht bestimmt |

### Herstellung des Harzes (für Beispiele 4 bis 7)

Der Photoinitiator GENOCURE TPO wird im Monomer SARTOMER SR 351 bei Raumtemperatur und unter Rühren vollständig gelöst. Anschließend werden die übrigen Komponenten des Harzes (SARTOMER SR 306, GENOMER 4425, EPOXY METHACRYLATE 97-053) hinzugegeben. Es wird so lange gerührt bis eine homogene Mischung entsteht.

### Herstellung der Harzzusammensetzungen (für Beispiele 4 bis 7)

Zur Herstellung der Harzzusammensetzungen wurde ein DAZ-Mischer der Firma Hauschild verwendet (Speedmixer DAC 400 FVZ). 60 g des Harzes (50 Gew.-% der Gesamtmenge des Harzes) und 90 g der Füllstoffmischung (50 Gew.-% der Gesamtmenge der Füllstoffmischung) werden in einem für den Speedmixer geeigneten Kunststoffbecher (750 ml) vorgelegt und 2 min bei 2.200 U/min dispergiert. Anschließend gibt man die restliche Menge der Füllstoffmischung (50 Gew.-% der Gesamtmenge) hinzu und dispergiert erneut 2 min bei 2.200 U/min. Im dritten Schritt wird die restliche Menge des Harzes (50 Gew.-% der Gesamtmenge) hinzugegeben, gefolgt von weiteren 2 min Dispergierung bei 2.200 U/min. Die resultierende Harzzusammensetzung hat einen Füllstoffgehalt von 60 Gew.-%.

### Viskositätsmessungen

Die Viskosität von Harzen und Harzzusammensetzungen wurden mit dem Rheometer MCR 102 der Fa. Anton Paar bestimmt. Folgende Einstellungen wurden gewählt:
Geometrie = 50 mm Platte/Platte, Messtemperatur = 25 °C, Scherraten = 0,1 s⁻¹ und 10 s⁻¹.

### 3D-Druck von Prüfkörpern der gehärteten Harzzusammensetzung

Die strahlungshärtbaren Harzzusammensetzungen werden mit einem Drucker des Typs SolFlex 650 der Fa. Way2Production (W2P) zu Prüfkörpern der gehärteten Harzzusammensetzung gedruckt.

### Nachhärtung der Prüfkörper der gehärteten Harzzusammensetzung

Die Prüfkörper der gehärteten Harzzusammensetzung werden nach dem Druck mit einer UV-Lampe (Fa. Kulzer HiLite Power, emittierte Wellenlänge = 390 - 540 nm) beidseitig für 180 s nachgehärtet.

### Mechanische Eigenschaften der gehärteten Harzzusammensetzung

Die Prüfkörper haben folgende Abmessungen: Länge l = (80 ± 2) mm, Breite b = (10 ± 0,2) mm, Dicke h = (4 ± 0,2 ) mm.

Die Biegeeigenschaften werden gemäß ISO 178 bestimmt.

Die Wärmeformbeständigkeitstemperatur wird gemäß ISO 75, Verfahren A, bestimmt. Die Heizrate des Ölbades beträgt 50 K/h.

### Beispiel 1 (Vergleich)

Das kommerzielle Harz Prototype Clear der Fa. Way2Production wurde mit 50 Gew.-% eines amorphen Siliciumdioxids (d50 = 5 µm) nach dem Prinzip der oben beschriebenen Methode gefüllt. Die Harzzusammensetzung hat eine Viskosität von 5.000 mPa*s (Scherrate = 0,1 s⁻¹) bzw. von 10.000 mPa*s (Scherrate = 10 s⁻¹). Aufgrund der hohen Viskosität eignet sich diese Harzzusammensetzung nicht für den 3D-Druck.

### Beispiel 2 (Vergleich)

Analog Beispiel 1. Anstelle des unsilanisierten Füllstoffs wurde ein mit MST silanisiertes amorphes Siliciumdioxid (d50 = 5 µm) verwendet.

Die Harzzusammensetzung zeigt eine gute Fließfähigkeit. Die Viskosität beträgt 4.000 mPa*s (Scherrate = 0,1 s⁻¹) bzw. 5.700 mPa*s (Scherrate = 10 s⁻¹). Bereits nach 6-stündiger Lagerung bei 50 °C zeigt die Harzzusammensetzung eine deutlich sichtbare Sedimentation. Damit ist diese Harzzusammensetzung nicht dauerhaft lagerstabil.

Eine frisch hergestellte Probe der Harzzusammensetzung wurde nach den oben genannten Methoden zu Prüfkörpern der gehärteten Harzzusammensetzung weiterverarbeitet. Die mechanischen Eigenschaften sind Tabelle 1 zu entnehmen.

### Beispiel 3 (Vergleich)

Analog Beispiel 2. Anstelle eines MST-silanisierten Füllstoffs wurden zwei MSTsilanisierte Füllstoffe unterschiedlicher Korngrößenverteilung verwendet (80 Gew.-% eines amorphen Siliciumdioxids mit einem d50 von 5 µm, 20 Gew.-% eines amorphen Siliciumdioxids mit einem d50 von 1 µm).

Die Harzzusammensetzung zeigt eine gute Fließfähigkeit. Die Viskosität beträgt 4.200 mPa*s (Scherrate = 0,1 s⁻¹) bzw. 4.400 mPa*s (Scherrate = 10 s⁻¹). Bereits nach 6-stündiger Lagerung bei 50 °C zeigt die Harzzusammensetzung eine deutlich sichtbare Sedimentation. Damit ist diese Harzzusammensetzung nicht dauerhaft lagerstabil.

Eine frisch hergestellte Probe der Harzzusammensetzung wurde nach den oben genannten Methoden zu Prüfkörpern der gehärteten Harzzusammensetzung weiterverarbeitet. Die mechanischen Eigenschaften sind Tabelle 1 zu entnehmen.

**Tabelle 1**

| **Parameter** | **Einheit** | **Beispiel 1** | **Beispiel 2** | **Beispiel 3** |
|---|---|---|---|---|
| Biegeeigenschaften nach ISO 178 | | | | |
| E_{f} | MPa | n.b. | 6.500 | 6.400 |
| σ_{fB} | MPa | n.b. | 142 | 154 |
| ε_{fB} | % | n.b. | 3,1 | 3,6 |

| Wärmeformbeständigkeit nach ISO 75 | | | | |
|---|---|---|---|---|
| HDT A | °C | n.b. | 70 | 71 |

Die gehärteten Harzzusammensetzungen aus den Beispielen 2 und 3 zeigen sehr gute Bruchspannungen und Bruchdehnungen. Das Biegemodul ist für viele Anwendungen jedoch noch zu gering. Gleiches gilt für die Wärmeformbeständigkeit.

### Beispiele 4 bis 7

Für die Beispiele 4 bis 7 wurde anstelle eines kommerziellen Harzes ein selbst formuliertes Harz mit einer niedrigen Viskosität von < 100 MPa*s (Scherrate = 10 s⁻¹) verwendet, das nach der oben beschriebenen Methode hergestellt wurde. In Analogie zu den vorangegangenen Beispielen 1 bis 3 wurden in das Harz Füllstoffmischungen unterschiedlicher Zusammensetzung nach der oben beschriebenen Methode eingearbeitet. Die resultierenden strahlungshärtbaren Harzzusammensetzungen wurden hinsichtlich Viskosität charakterisiert. Von der Harzzusammensetzung des erfindungsgemäßen Beispiels 7 wurden Prüfkörper nach dem oben beschriebenen 3D-Druck-Verfahren angefertigt. Die Prüfkörper der gehärteten Harzzusammensetzung wurden hinsichtlich ihrer Biegeeigenschaften und ihrer Wärmeformbeständigkeit charakterisiert. Details sind Tabelle 2 zu entnehmen.

Die Harzzusammensetzungen der Beispiele 4 und 6 sind zwar über einen längeren Zeitraum lagerstabil (keine Sedimentation), jedoch ist die Viskosität in Hinblick auf eine Verarbeitung im 3D-Druck eher etwas zu hoch. Die Harzzusammensetzung aus Beispiel 5 zeigt dagegen gute Fließeigenschaften, bietet aber keine dauerhafte Stabilität gegenüber Sedimentation. Die erfindungsgemäße Harzzusammensetzung aus Beispiel 7 ist sowohl gut zu verarbeiten (gute Fließeigenschaften) als auch lagerstabil (keine Sedimentation).

Die gehärtete Harzzusammensetzung des erfindungsgemäßen Beispiels 7 zeigt zudem gute Biegeeigenschaften und eine hohe Wärmeformbeständigkeit.

**Tabelle 2**

| **Rezeptur** | **Funktion/Einheit** | **Beispiel 4 Vergleich [Gew.-%] Gesamt∥relativ** | | **Beispiel 5 Vergleich [Gew.-%] Gesamt∥relativ** | | **Beispiel 6 [Gew.-%] Gesamt∥relativ** | | **Beispiel 7 [Gew.-%] Gesamt∥relativ** | |
|---|---|---|---|---|---|---|---|---|---|
| SARTOMER SR 306 | Monomer | 15 | | 15 | | 15 | | 15 | |
| GENOMER 4425 | Oligomer | 5 | | 5 | | 5 | | 5 | |
| EPOXY METHACRYLATE 97-053 | Monomer | 5 | | 5 | | 5 | | 5 | |
| SARTOMER SR 351 | Monomer | 13,5 | | 13,5 | | 13,5 | | 13,5 | |
| GENOCURE TPO | Photoinitiator | 1,5 | | 1,5 | | 1,5 | | 1,5 | |
| Füllstoffgehalt gesamt | | 60 | 100 | 60 | 100 | 60 | 100 | 60 | 100 |
| a-SiO₂, MST-silanisiert, d50 = 7 µm | erste Partikel der Füllstoffmischung | 48 | 80 | | | | | | |
| Sphärisches a-SiO₂, MST-silanisiert, d50 = 5 µm | erste Partikel der Füllstoffmischung | | | 48 | 80 | 30 | 50 | 48 | 60 |
| a-SiO₂, MST-silanisiert, d50 = 1 µm | zweite Partikel der Füllstoffmischung | 12 | 20 | 12 | 20 | 29,5 | 49,2 | 11,5 | 19,2 |
| a-SiO₂, MST-silanisiert, BET 100 m²/g | Nanopartikel der Füllstoffmischung | | | | | 0,5 | 0,8 | 0,5 | 0,8 |
| Summe | Gew.-% | 100 | | 100 | | 100 | | 100 | |
| Viskosität bei 0,1 s⁻¹ | mPa*s | 67.000 | | 6.000 | | 31.000 | | 12.000 | |
| Viskosität bei 10 s⁻¹ | mPa*s | 3.000 | | 2.000 | | 2.500 | | 2.000 | |
| Bieqeeiqenschaften der strahlunqsqehärteten Harzzusammensetzunqen nach ISO 178 | | | | | | | | | |
| E_{f} | MPa | n.b. | | n.b. | | n.b. | | 9.000 | |
| σ_{fB} | MPa | n.b. | | n.b. | | n.b. | | 67 | |
| ε_{fB} | % | n.b. | | n.b. | | n.b. | | 0,8 | |
| Wärmeformbeständigkeit der strahlungsgehärteten Harzzusammensetzunqen nach ISO 75 | | | | | | | | | |
| HDT A | °C | n.b. | | n.b. | | n.b. | | 170 | |
| Verarbeitbarkeit | | Viskosität zu hoch | | Viskosität in Ordnung | | Viskosität eher hoch | | Viskosität sehr gut | |
| Lagerstabilität | | keine Sedimentation | | nicht sedimentationsstabil | | keine Sedimentation | | keine Sedimentation | |

## Patentansprüche

1. Strahlungshärtbare Harzzusammensetzung umfassend
- 0 bis 30 Gew.-% eines oder mehrerer Oligomere,
- 15 bis 80 Gew.-% eines oder mehrerer Monomere,
- 10 bis 80 Gew.-% Füllstoffmischung,
- 0,1 bis 5 Gew.-% eines oder mehrerer Photoinitiatoren,
wobei die Füllstoffmischung Folgendes umfasst:
- 39,9 bis 90 Gew.-% erste Partikel mit einer Korngröße d50ᵥₒₗ von 3 bis 20 µm,
- 9,9 bis 60 Gew.-% zweiter Partikel mit einer Korngröße d50ᵥₒₗ von 0,5 bis 1 µm,
- 0,1 bis 5 Gew.-% Nanopartikel mit einer BET im Bereich von 10 bis 100 m²/g.

2. Strahlungshärtbare Harzzusammensetzung nach Anspruch 1, wobei die ersten und/oder die zweiten Partikel silanisiert sind.

3. Strahlungshärtbare Harzzusammensetzung nach Anspruch 1 oder 2, wobei die ersten Partikel sphärisch sind, gemessen mit einem QICPIC^{®}-Gerät.

4. Strahlungshärtbare Harzzusammensetzung nach einem der Ansprüche 1 bis 3, wobei die Oligomere radikalisch polymerisierbare Gruppen umfassen, insbesondere (Meth)acrylatgruppen.

5. Strahlungshärtbare Harzzusammensetzung nach einem der Ansprüche 1 bis 4, wobei die Monomere über mindestens eine radikalisch polymerisierbare, ethylenische Doppelbindung verfügen, insbesondere über (Meth)acrylatgruppen.

6. Strahlungshärtbare Harzzusammensetzung nach einem der Ansprüche 1 bis 5, wobei es sich bei den ersten und den zweiten Partikeln der Füllstoffmischung unabhängig voneinander um Füllstoffe ausgewählt aus amorphem Siliciumdioxid, kristallinem Siliciumdioxid, Feldspat, Glimmer, Anhydrit und Mischungen davon handelt.

7. Strahlungshärtbare Harzzusammensetzung nach Anspruch 6, wobei der Feldspat ausgewählt wird aus Kalifeldspat, Natriumfeldspat, sogenannten Foiden und Mischungen davon.

8. Strahlungshärtbare Harzzusammensetzung nach einem der Ansprüche 1 bis 7, wobei der Photoinitiator ausgewählt wird aus Substanzen, die in einem Wellenlängenbereich von 355-405 nm aktiv sind, bevorzugt aus der Stoffklasse der Phosphinoxide.

9. Strahlungshärtbare Harzzusammensetzung nach einem der Ansprüche 1 bis 8, wobei die Harzzusammensetzung ohne Füllstoffmischung eine Viskosität im Bereich von 10 bis 1.000 mPa*s, insbesondere im Bereich von 10 bis 100 mPa*s, gemessen bei 25 °C und einer Scherrate von 10 s⁻¹ mit einer Platte/Platte-Geometrie aufweist.

10. Strahlungshärtbare Harzzusammensetzung nach einem der Ansprüche 1 bis 9, wobei die strahlungshärtbare Harzzusammensetzung eine Viskosität von maximal 3.000 mPa*s bei einer Scherrate von 10 s⁻¹ und von maximal 15.000 mPa*s bei einer Scherrate von 0,1 s⁻¹ aufweist, jeweils gemessen bei 25 °C und mit einer Platte/Platte-Geometrie.

11. Strahlungshärtbare Harzzusammensetzung nach einem der Ansprüche 1 bis 10, wobei die Harzzusammensetzung nach einer Lagerung bei 25 °C für mindestens 3 Monate keine Sedimentation der Füllstoffmischung aufweist, gemessen durch Sichtprüfung.

12. Strahlungsgehärtete Harzzusammensetzung erhältlich durch Strahlungshärtung der Harzzusammensetzung nach einem der Ansprüche 1 bis 11.

13. Strahlungsgehärtete Harzzusammensetzung nach Anspruch 12, mit einem Biege-Elastizitäts-Modul nach ISO 178 im Bereich von 6.000 bis 12.000 MPa und/oder einer Wärmeformbeständigkeitstemperatur HDT A nach ISO 75 von mindestens 100 °C.

## Claims

1. A radiation-curable resin composition, comprising
- from 0 to 30% by weight of one or more oligomers;
- from 15 to 80% by weight of one or more monomers;
- from 10 to 80% by weight of a filler mixture;
- from 0.1 to 5% by weight of one or more photoinitiators;
wherein the filler mixture includes:
- from 39.9 to 90% by weight of first particles having a grain size d50ᵥₒₗ of 3 to 20 µm;
- from 9.9 to 60% by weight of second particles having a grain size d50ᵥₒₗ of 0.5 to 1 µm;
- from 0.1 to 5% by weight of nanoparticles having a BET surface area within a range of from 10 to 100 m²/g.

2. The radiation-curable resin composition according to claim 1, wherein said first and/or second particles are silanized.

3. The radiation-curable resin composition according to claim 1 or 2, wherein said first particles are spherical in shape as measured with a QICPIC^{®} device.

4. The radiation-curable resin composition according to any of claims 1 to 3, wherein said oligomers comprise free-radically polymerizable groups, especially (meth)acrylate groups.

5. The radiation-curable resin composition according to any of claims 1 to 4, wherein said monomers have at least one free-radically polymerizable ethylenic double bond, especially (meth)acrylate groups.

6. The radiation-curable resin composition according to any of claims 1 to 5, wherein said first and second particles of the filler mixture are independently fillers selected from amorphous silicon dioxide, crystalline silicon dioxide, feldspar, mica, anhydrite, and mixtures thereof.

7. The radiation-curable resin composition according to claim 6, wherein said feldspar is selected from potash feldspar, sodium feldspar, so-called feldspathoids, and mixtures thereof.

8. The radiation-curable resin composition according to any of claims 1 to 7, wherein said photoinitiator is selected from substances that are active within a wavelength range of from 355 to 405 nm, preferably from the phosphine oxide class of substances.

9. The radiation-curable resin composition according to any of claims 1 to 8, wherein said resin composition without a filler mixture has a viscosity within a range of from 10 to 1000 mPa·s, especially within a range of from 10 to 100 mPa·s, as measured at 25 °C and at a shear rate of 10 s⁻¹ with a plate-plate geometry.

10. The radiation-curable resin composition according to any of claims 1 to 9, wherein said radiation-curable resin composition has a viscosity of at most 3000 mPa·s at a shear rate of 10 s⁻¹, and at most 15,000 mPa·s at a shear rate of 0.1 s⁻¹, respectively measured at 25 °C and with a plate-plate geometry.

11. The radiation-curable resin composition according to any of claims 1 to 10, wherein said resin composition does not exhibit any sedimentation of the filler mixture after storage at 25 °C for at least 3 months, as measured by visual inspection.

12. A radiation-cured resin composition obtainable by radiation-curing the resin composition according to any of claims 1 to 11.

13. The radiation-cured resin composition according to claim 12, having a flexural modulus of elasticity according to ISO 178 within a range of from 6,000 to 12,000 MPa, and/or a heat deflection temperature HDT A according to ISO 75 of at least 100 °C.

## Revendications

1. Composition de résine durcissable par radiation comprenant
- de 0 à 30 % en poids d'un ou plusieurs oligomères,
- de 15 à 80 % en poids d'un ou plusieurs monomères,
- de 10 à 80 % de mélange de charges,
- de 0,1 à 5 % en poids d'un ou plusieurs photoinitiateurs,
dans laquelle le mélange de charges comprend ce qui suit :
- de 39,9 à 90 % en poids de premières particules ayant une granulométrie d50ᵥₒₗ de 3 à 20 µm,
- de 9,9 à 60 % en poids de deuxièmes particules ayant une granulométrie d50ᵥₒₗ de 0,5 à 1 µm,
- de 0,1 à 5 % en poids de nanoparticules ayant une surface spécifique BET de 10 à 100 m²/g.

2. Composition de résine durcissable par radiation selon la revendication 1, dans laquelle les premières et/ou les deuxièmes particules sont silanisées.

3. Composition de résine durcissable par radiation selon la revendication 1 ou 2, dans laquelle les premières particules sont sphériques selon une mesure avec un appareil QICPIC^{®}.

4. Composition de résine durcissable par radiation selon l'une des revendications 1 à 3, dans laquelle les oligomères comprennent des groupes pouvant faire l'objet d'une polymérisation radicalaire, en particulier des groupes méthacrylates.

5. Composition de résine durcissable par radiation selon l'une des revendications 1 à 4, dans laquelle les monomères disposent d'au moins une double liaison éthylénique pouvant faire l'objet d'une polymérisation radicalaire, en particulier des groupes méthacrylates.

6. Composition de résine durcissable par radiation selon l'une des revendications 1 à 5, dans laquelle les premières et les deuxièmes particules du mélange de charges sont des charges sélectionnées indépendamment l'une de l'autre parmi le dioxyde de silicium amorphe, le dioxyde de silicium cristallin, les feldspaths, les micas, l'anhydrite et les mélanges de ceux-ci.

7. Composition de résine durcissable par radiation selon la revendication 6, dans laquelle le feldspath est sélectionné parmi le feldspath potassique, le feldspath sodique, les feldspathoïdes et les mélanges de ceux-ci.

8. Composition de résine durcissable par radiation selon l'une des revendications 1 à 7, dans laquelle le photo-initiateur est sélectionné parmi des substances actives dans un intervalle de longueurs d'onde de 355-405 nm, particulièrement parmi la classe des oxydes de phosphine.

9. Composition de résine durcissable par radiation selon l'une des revendications 1 à 8, dans laquelle la composition de résine présente sans mélange de charges présente une viscosité dans un intervalle de 10 à 1 000 mPa*s, en particulier dans un intervalle de 10 à 100 mPa*s, mesurée à 25 °C et une vitesse de cisaillement de 10 s⁻¹ en régime laminaire.

10. Composition de résine durcissable par radiation selon l'une des revendications 1 à 9, dans laquelle la composition de résine durcissable par radiation présente une viscosité de 3 000 mPa*s au maximum pour une vitesse de cisaillement de 10 s⁻¹ et de 15 000 mPa*s au maximum pour une vitesse de cisaillement de 0,1 s⁻¹, respectivement mesurées à 25 °C et en régime laminaire.

11. Composition de résine durcissable par radiation selon l'une des revendications 1 à 10, dans laquelle la composition de résine ne présente pas de sédimentation du mélange de charges, mesurée par contrôle visuel, après une conservation à 25 °C d'au moins 3 mois.

12. Composition de résine durcie par radiation pouvant être obtenue par durcissement par radiation de la composition de résine selon l'une des revendications 1 à 11.

13. Composition de résine durcie par radiation selon la revendication 12, dotée d'un module de flexion conformément à ISO 178 dans un intervalle de 6 000 à 12 000 mPa et/ou une température de déformation thermique HDT A conformément à ISO 75 d'au moins 100 °C.
